# EUROPÄISCHE PATENTANMELDUNG

(11) **EP 4 541 685 A1**
(43) Veröffentlichungstag der Anmeldung: **23.04.2025**
(21) Anmeldenummer: 24201857.0
(22) Anmeldetag: 23.09.2024
(51) Int. Cl.: B61H 7/08

(54) **BREMSMAGNET EINER MAGNETSCHIENENBREMSVORRICHTUNG EINES SCHIENENFAHRZEUGS**

(30) Priorität: 16.10.2023 DE 102023004180
(71) Anmelder: KNORR-BREMSE GmbH, 2340 Mödling (AT)
(72) Erfinder: RATHAMMER, Richard, 2262 Stillfried-Grub (AT)
(74) Vertreter: Wiedemann, Markus

(57) **Zusammenfassung**

Die Erfindung betrifft einen Bremsmagneten (1) einer Magnetschienenbremsvorrichtung eines Schienenfahrzeugs, aufweisend: Eine Magnetspule (2) mit derart in Längsrichtung des Bremsmagneten (1) gesehen umlaufenden Windungen eines elektrisch leitfähigen Spulendrahts, dass quer zur Längsrichtung eine Durchgangsöffnung (7) ausgebildet wird, einen insbesondere im Querschnitt hufeisenförmigen Magnetkern (2) mit einem Joch (8), welches die Durchgangsöffnung (7) der Magnetspule (2) durchragt und welches von der Magnetspule (2) mit einem Oberzug (9) und einem Unterzug (10) umschlungen ist, und mit zwei endseitigen zum Reibkontakt mit einem Schienenkopf einer Schiene ausgebildeten Polschuhen (13, 14). Die Erfindung ist dadurch gekennzeichnet, dass der Magnetkern (3) zwei miteinander verbundene Magnetkernhälften (4, 5) mit je einem Jochteil (15, 16) des Jochs (8) umfasst, welche in die Durchgangsöffnung (7) der Magnetspule (2) hineinragen, und dass die Magnetspule (2) magnetspulenkörperlos und formsteif und/oder selbsttragend ausgeführt ist.

## Beschreibung

Die vorliegende Erfindung betrifft einen Bremsmagneten einer Magnetschienenbremsvorrichtung eines Schienenfahrzeugs gemäß dem Oberbegriff von Anspruch 1, ein Verfahren zur Herstellung eines Bremsmagneten nach dem Oberbegriff von Anspruch 9, eine Magnetschienenbremsvorrichtung gemäß Anspruch 16 und ein Schienenfahrzeug mit einer solchen Magnetschienenbremsvorrichtung gemäß Anspruch 18.

Die krafterzeugende Hauptkomponente einer elektrischen Magnetschienenbremsvorrichtung ist der Bremsmagnet. Er ist ein Elektromagnet, bestehend aus einer sich in Schienenrichtung erstreckenden, im Stand der Technik von einem Magnetspulenkörper getragenen Magnetspule und einem hufeisenförmigen Magnetkern. Der hufeisenförmige Magnetkern bildet an seiner der Fahrzeugschiene zugewandten Seite Polschuhe aus. Der in der Magnetspule fließende Gleichstrom bewirkt eine magnetische Spannung, die in dem Magnetkern einen magnetischen Fluss erzeugt, der sich über den Schienenkopf kurzschließt, sobald der Bremsmagnet mit seinen Polschuhen auf der Schiene aufliegt. Dadurch kommt eine magnetische Anziehungskraft zwischen Bremsmagnet und Schiene zustande. Durch die kinetische Energie des bewegten Schienenfahrzeugs wird die Magnetschienenbremsvorrichtung über Mitnehmer entlang der Schiene gezogen. Hierbei entsteht durch die Gleitreibung zwischen Bremsmagnet und Schiene in Verbindung mit der magnetischen Anziehungskraft eine Bremskraft. Durch den Reibkontakt mit der Schiene entsteht an den Polschuhen des Bremsmagneten Reibverschleiß, welcher ein maximales Verschleißmaß nicht überschreiten darf.

Prinzipiell kann man nach dem konstruktiven Aufbau zwei verschiedene Arten von Magnetschienenbremsvorrichtungen unterscheiden.

Zum einen kann die Magnetschienenbremsvorrichtung eine hier relevante Starrmagnetschienenbremsvorrichtung sein, bei welcher der Bremsmagnet ein Starrmagnet ist, wie beispielsweise gemäß US 2 255 798, und einen dort kastenförmigen Magnetspulenkörper aufweist, in welchem eine Magnetspule aufgenommen ist. Der Magnetkern ist mehrteilig ausgebildet, insbesondere sind die mit der Schiene in Reibkontakt stehenden Polschuhe als separate Teile ausgeführt. Starrmagnetschienenbremsvorrichtungen werden meist im Nahverkehr bei Straßen- und Stadtbahnen eingesetzt.

Weiterhin sind hier nicht relevante Gliedermagnetschienenbremsvorrichtungen mit Gliedermagneten als Bremsmagneten bekannt, bei welchen der Magnetspulenkörper Trennwände und dazwischen angeordnete Kammern aufweist. In den Kammern zwischen den Trennwänden sind Magnetkerne begrenzt beweglich gehalten, die sich während des Bremsvorgangs ausrichten, um Unebenheiten am Schienenkopf besser folgen zu können. In diesem Fall sind die Polschuhe an den der Schiene zugewandten Stirnflächen der Magnetkerne der Zwischenglieder ausgebildet. Gliedermagnetschienenbremsvorrichtungen werden standardmäßig im Vollbahnbereich eingesetzt, finden aber auch im Nahverkehr bei Straßen- und Stadtbahnen Verwendung.

Die Größe der Bremskraft einer Magnetschienenbremsvorrichtung ist u.a. vom magnetischen Fluss des Magnetkreises, d.h. auch von der Geometrie des Magnetkerns oder Magnetkerne, der magnetischen Durchflutung und den Reibverhältnissen zwischen Bremsmagnet und Schiene abhängig.

Die Aufgabe der Erfindung darin, einen Bremsmagneten, insbesondere einen Starrmagneten für eine Magnetschienenbremsvorrichtung, insbesondere für eine Starrmagnetschienenbremsvorrichtung und ein Verfahren zu seiner Herstellung zur Verfügung zu stellen, der eine einfache Trennung seiner Komponenten sowie eine einfache Verwertung seiner Komponenten nach Erreichen der Lebensdauer oder von Verschleißgrenzen ermöglicht. Weiterhin sollen auch eine Magnetschienenbremsvorrichtung mit einem solchen Bremsmagneten sowie auch ein Schienenfahrzeug mit einer solchen Magnetschienenbremsvorrichtung zur Verfügung gestellt werden.

Diese Aufgabe wird durch die Patentansprüche 1, 9, 16 und 18 gelöst.

Weitere vorteilhafte Ausgestaltungen und Weiterbildungen der Erfindung ergeben sich aus den abhängigen Ansprüchen.

### Offenbarung der Erfindung

Die Erfindung hat erkannt, dass ein hoher Anteil der Magnetschienenbremse besteht aus Stahl und metallischen Legierungen besteht. Diese sind wiederum mit nichtmetallischen Isolationsstoffen verbunden. Eine Trennung der Stoffe ist wirtschaftlich schwierig zu bewerkstelligen.

Beim Stand der Technik wie bei der eingangs genannten US 2 255 798 ist die Magnetspule in einem Magnetspulenkörper aufgewickelt, wobei eine Trennung der Magnetspule vom Magnetspulenkörper nur durch ein Zerschneiden von zumindest einer Komponente möglich ist. Daher werden in der Regel die Bremsmagnete bei Reparaturen oder am Ende ihrer Lebensdauer meist komplett entsorgt, ohne dass ein Recyclingkonzept vorhanden ist. Durch die aufwendige Isolation und Abkapselung der Magnetspule auf dem Magnetspulenkörper ist eine Automatisierung der Bremsmagnetherstellung schwierig durchführbar. Nicht zuletzt sind die im oberen Bereich des Magnetspulenkörper angeordneten Seitenwände für die Magnetfelderzeugung nicht relevant und verursachen einen Materialmehrverbrauch und Mehrgewicht.

Ein Ziel der Erfindung besteht darin, die Komponenten des Bremsmagneten am Ende der Lebensdauer des Bremsmagneten auf einfache Weise voneinander trennen zu können, Verschleißteile leicht tauschbar und durch eine Aufbereitung wiederverwendbar zu machen. Zusätzlich bietet die Erfindung Vorteile beim Herstellverfahren und bei der Erhöhung des magnetischen Flusses.

Die Erfindung geht in einem ersten Aspekt aus von einem Bremsmagneten, insbesondere von einem Starrbremsmagneten einer Magnetschienenbremsvorrichtung, insbesondere einer Starrmagnetschienenbremsvorrichtung eines Schienenfahrzeugs, aufweisend:
a) Eine Magnetspule mit derart in Längsrichtung des Bremsmagneten gesehen umlaufenden Windungen eines elektrisch leitfähigen Spulendrahts, dass quer zur Längsrichtung eine Durchgangsöffnung ausgebildet wird,
b) einen insbesondere im Querschnitt hufeisenförmigen Magnetkern mit einem Joch, welches die Durchgangsöffnung der Magnetspule durchragt und welches von der Magnetspule mit einem Oberzug und einem Unterzug umschlungen ist, und mit zwei endseitigen zum Reibkontakt mit einer Schiene ausgebildeten und vorgesehenen Polschuhen.

Eine solche elektrische Magnetspule ist allgemein bekannt und weist um einen ein magnetisches Feld führenden Magnetkern anzuordnende Windungen auf. Diese Windungen sind aus einem elektrisch leitfähigen Material, insbesondere Metall, um einen elektrischen Strom zu führen. Ein solcher, in den Windungen geführter elektrischer Strom, führt zur Bildung eines magnetischen Feldes, welches über die hufeisenförmigen Magnetkerne und den Schienenkopf geschlossen wird.

Gemäß dem ersten Aspekt ist erfindungsgemäß vorgesehen, dass
c) der Magnetkern zwei miteinander verbundene Magnetkernhälften mit je einem Jochteil umfasst, welche in die Durchgangsöffnung der Magnetspule hineinragen, und dass
d) die Magnetspule magnetspulenkörperlos und formsteif und/oder selbsttragend ausgeführt ist.

Magnetspulenkörperlos bedeutet, dass der Bremsmagnet oder die Magnetspule ohne Magnetspulenkörper ausgeführt ist bzw., dass die Magnetspule bzw. der Bremsmagnet ohne Magnetspulenkörper ausgeführt ist. Eine formsteife und/oder selbsttragende Magnetspule ist per se formsteif und/oder selbsttragend und behält ihre Form ohne weitere Komponenten bei. Vorzugsweise kann die Magnetspule den Magnetkern ohne Zwischenordnung weiterer Komponenten direkt kontaktieren.

Dadurch entstehen die folgenden Vorteile: Da der Magnetkern und die Magnetspule getrennte und jeweils separate Komponenten des Bremsmagneten darstellen, wird eine unabhängige Reparatur und Aufarbeitung dieser Komponenten ermöglicht. Somit kann beispielsweise der Magnetkern durch einen überholten Magnetkern ersetzt werden, ohne dass die eine eigene Einheit bildende Magnetspule ersetzt werden müsste. Für den Magnetkern kann durch die davon unabhängige Magnetspule ein geringes Gewicht erreicht werden, bei einer gleichzeitigen Erhöhung der magnetischen Flussdichte. Auch kann die Geometrie der Magnetspule asymmetrisch ausgeführt werden, beispielsweise indem der Oberzug und der Unterzug der Magnetspule mit einer jeweils unterschiedlichen Höhe oder Dicke ausgeführt werden, ohne dass die Form des Magnetkerns dadurch verändern müsste. Durch eine asymmetrische Spulengeometrie kann eine zusätzliche Reduktion der Bauhöhe erzielt werden. Die Herstellung einer asymmetrischen Magnetspule ist daher eine optionale Ausführung, wodurch eine hohe Flexibilität bei der Geometrie gegeben ist. Durch die eigenständige und formstabile Magnetspule kann auch die elektrische Isolation bestmöglich sichergestellt werden. Für den Magnetkern kann ein für den magnetischen Fluss günstiges Material ausgewählt werden. Nicht zuletzt ist am Ende der Lebensdauer eine leichte Trennung von Magnetspule und Magnetkern für das Recycling möglich.

Der Magnetkern umfasst zwei miteinander verbundene Magnetkernhälften mit je einem insbesondere integral oder einstückig mit der betreffenden Magnetkernhälfte ausgeführten Jochteil. Insbesondere umfasst der Magnetkern eine erste Magnetkernhälfte mit einem ersten Jochteil und einem ersten Polschuh und eine zweite Magnetkernhälfte mit einem zweiten Jochteil und einem zweiten Polschuh. Die beiden Magnetkernhälften sind insbesondere symmetrisch in Bezug auf eine mittige Symmetrieebene ausgeführt. Außerdem kontaktieren sich die beiden Magnetkernhälften bevorzugt ausschließlich an ihren Jochteilen in dieser Symmetrieebene.

Insbesondere besteht der Magnetkern ausschließlich aus den zwei miteinander verbundenen ersten und zweiten Magnetkernhälften, mit welchen auch die ersten und zweiten Jochteile und die ersten und zweiten Polschuhe jeweils einstückig ausgeführt sind. Mit anderen Worten ist dann die erste Magnetkernhälfte mit dem ersten Jochteil und dem ersten Polschuh einstückig ausgeführt wie auch die zweite Magnetkernhälfte mit dem zweiten Jochteil und dem zweiten Polschuh einstückig ausgeführt ist. Dann besteht der Magnetkern lediglich aus den beiden insbesondere miteinander verschraubten Magnetkernhälften und den diese miteinander verbindenden Verbindungsmitteln. Dieser Aufbau ermöglicht eine einfache Montage und Trennung der Magnetkernhälften und der Magnetspule, da dann zur Montage die Jochteile der beiden Magnetkernhälften lediglich in die Durchgangsöffnung der eigen- oder formsteifen Magnetspule eingeführt und miteinander verbunden werden müssen. Bilden die Polschuhe insbesondere-jeweils einen integralen Bestandteil der Magnetkernhälften, müssen diese nicht separat montiert oder demontiert werden. Bei verschlissenen Polschuhen können diese beispielsweise durch Aufschweißen neuen Materials (beispielsweise auch in Bezug zum Material der Magnetkernhälften unterschiedlichem Material) dann auf den Schenkeln der Magnetkernhälften neu aufgebaut werden. Diese Art der Ausführung ist auch bei neuen Bremsmagneten möglich.

Bei dem Bremsmagneten kann die Ausführung der Magnetspule als magnetspulenkörperlose, formsteife und/oder selbsttragende Magnetspule wenigstens teilweise dadurch erzeugt sein, dass die Windungen des Spulendrahts mittels eines Mediums adhäsiv miteinander verbunden sind. Das Medium ist bevorzugt elektrisch nichtleitend.

Unter Adhäsion sind hier die Haftkräfte an den Kontaktflächen zwischen dem Medium und dem Spulendraht oder zwischen unterschiedlichen Abschnitten des Spulendrahts durch Molekularkräfte zu verstehen. Das Medium kann sich in festem oder in flüssigem Zustand befinden. Im Bereich der Klebstoffe soll unter Adhäsion die Haftung von Klebschichten an den Oberflächen des Spulendrahts.

Das Medium kann wenigstens Folgendes umfassen: Wenigstens einen Klebstoff, durch welchen die Windungen des Spulendrahts miteinander verklebt sind, und/oder ein aushärtbares Material, wobei die Windungen des Spulendrahts in das aushärtbare Material ein gebettet oder eingegossen sind. Insbesondere können die Windungen des Spulendrahts wenigstens teilweise in eine Matrix aus einem Harz und/oder Kunststoff eingegossen sein.

Zusätzlich oder alternativ kann die Ausführung der Magnetspule als magnetspulenkörperlose, formsteife und/oder selbsttragende Magnetspule wenigstens teilweise dadurch erzeugt sein, dass die Windungen des Spulendrahts in einer Struktur, insbesondere in einem Geflecht miteinander verflochten sind. Die Magnetspule stellt dann ein Geflecht oder Flechtwerk von Windungen des Spulendrahts dar, wobei die Struktur des Geflechts beliebig ist. Beispielsweise kann das Geflecht Verdrillungen des Spulendrahts umfassen. Das Geflecht oder Flechtwerk ist dann bevorzugt derart ausgeführt, dass die daraus geformte Magnetspule form- oder eigensteif oder selbsttragend ist.

Zusätzlich oder alternativ kann die Ausführung der Magnetspule als magnetspulenkörperlose, formsteife und/oder selbsttragende Magnetspule wenigstens teilweise dadurch erzeugt sein, dass wenigstens einige der Windungen der Magnetspule aus einem elektrisch leitfähigen Spulenmaterial gegossene Windungen sind und die Magnetspule wenigstens teilweise eine gießtechnisch hergestellte Magnetspule ist.

Wie bereits oben vor allem im Hinblick auf die daraus resultierenden Vorteile ausgeführt, können bei dem Bremsmagneten die Polschuhe der Magnetkernhälften jeweils einstückig mit der betreffenden Magnetkernhälfte ausgeführt sein. Die einstückige Ausführung der Polschuhe mit den Magnetkernhälften führt wegen der dann fehlenden Trennfugen zwischen den Polschuhen und den Magnetkernhälften zu einer Verringerung von magnetischen Verlusten und damit zu einer Erhöhung der Magnetkraft, die den Bremsmagneten gegen die Schiene drückt.

Eine weitere Vereinfachung bei der Herstellung und Montage des Bremsmagneten kann sich ergeben, wenn die elektrischen Anschlüsse der Magnetspule an die magnetspulenkörperlose und formsteife und/oder selbsttragende Magnetspule integral angeformt sind. Mit anderen Worten werden die elektrischen Anschlüsse bereits bei der Herstellung der Magnetspule an diese angeformt und bilden dann zusammen mit dieser eine einstückige Komponente des Bremsmagneten. Dann brauchen keine separaten Anschlüsse mehr hergestellt und mit den Windungen des Spulendrahts verbunden werden.

Ebenfalls zu einer einfachen Montage und Demontage trägt bei, wenn die Magnetkernhälften allein dadurch miteinander verbunden sind, dass die Jochteile der Magnetkernhälften miteinander verbunden sind, insbesondere durch eine Verschraubung mittels wenigstens einer Schraube. Denn dann ist es für die Montage oder Demontage der beiden Magnetkernhälften an der Magnetspule oder von dieser ausreichend, die Verschraubung anzubringen oder zu entfernen.

Die Erfindung betrifft in einem zweiten Aspekt ein Verfahren zum Herstellen eines Bremsmagneten einer Magnetschienenbremsvorrichtung eines Schienenfahrzeugs, welcher wenigstens aufweist: Eine Magnetspule mit derart in Längsrichtung des Bremsmagneten gesehen umlaufenden Windungen eines elektrisch leitfähigen Spulendrahts, dass quer zur Längsrichtung eine Durchgangsöffnung ausgebildet wird, einen insbesondere im Querschnitt hufeisenförmigen Magnetkern mit einem Joch, welches die Durchgangsöffnung der Magnetspule durchragt und welches von der Magnetspule mit einem Oberzug und einem Unterzug umschlungen ist, und mit zwei endseitigen zum Reibkontakt mit einer Schiene vorgesehenen Polschuhen, wobei der Magnetkern zwei miteinander verbundene Magnetkernhälften mit je einem Jochteil umfasst, welche in die Durchgangsöffnung der Magnetspule hineinragen und vorzugsweise dort miteinander verbunden sind.

Das ist gekennzeichnet durch wenigstens die folgenden Schritte:
a) Herstellen der Magnetspule als magnetspulenkörperlose, formsteife und/oder selbsttragende Magnetspule, und
b) Herstellen der beiden Magnetkernhälften, und
c) Einführen der beiden Jochteile der beiden Magnetkernhälften in die Durchgangsöffnung der Magnetspule, und
d) Verbinden der beiden Magnetkernhälften.

Bei dem Verfahren kann das Herstellen der Magnetspule als magnetspulenkörperlose, formsteife und/oder selbsttragende Magnetspule umfassen, dass
a) die Windungen des Spulendrahts auf eine Form gewunden werden, deren Außenkontur im Wesentlichen der Innenkontur der Durchgangsöffnung der Magnetspule entspricht, und dann
b) die auf die Form gewundenen Windungen mit einem Medium versehen werden, welches die Windungen miteinander adhäsiv verbindet, und
c) nach der adhäsiven Verbindung der Windungen die Form der Durchgangsöffnung der Magnetspule entfernt wird.

Insbesondere können die auf die Form gewundenen Windungen des Spulendrahts mit einem aushärtbaren Material und/oder mit einem Klebstoff versehen werden, und nach dem Aushärten des Klebstoffs und/oder des aushärtbaren Materials kann die Form aus der Durchgangsöffnung der dann eigensteifen oder selbsttragenden Magnetspule entfernt werden.

Auch kann bei dem Verfahren das Herstellen der Magnetspule als magnetspulenkörperlose, formsteife und/oder selbsttragende Magnetspule umfassen, dass die Windungen der Magnetspule aus einem elektrisch leitfähigen Spulenmaterial gegossen werden und die Magnetspule gießtechnisch hergestellt wird, wobei das elektrisch leitfähige Spulenmaterial zum Vergießen erhitzt wird und nach dem Gießen zu einer gewünschten Magnetspulenform erstarrt.

Alternativ oder zusätzlich kann bei dem Verfahren die Ausführung der Magnetspule als magnetspulenkörperlose, formsteife und/oder selbsttragende Magnetspule wenigstens teilweise dadurch erzeugt werden, dass die Windungen des Spulendrahts miteinander in einer Struktur verflochten werden.

Auch kann bei dem Verfahren das Verbinden der beiden Magnetkernhälften ausschließlich durch ein Verbinden der beiden Jochteile erfolgen, insbesondere durch Anbringen einer Verschraubung zwischen den beiden Jochteilen.

Wie oben beschrieben ist auch von besonderem Vorteil, wenn bei dem Verfahren das Herstellen der magnetspulenkörperlosen und formsteifen und/oder selbsttragenden Magnetspule ein integrales Anformen von elektrischen Anschlüssen an die Magnetspule und/oder das Herstellen der beiden Magnetkernhälften ein integrales Herstellen der beiden Magnetkernhälften zusammen mit den Polschuhen umfasst.

Die Erfindung betrifft in einem dritten Aspekt auch eine Magnetschienenbremsvorrichtung eines Schienenfahrzeugs, insbesondere eine eingangs beschriebene Starrmagnetschienenbremsvorrichtung, bei welcher der Bremsmagnet als Starrmagnet ausgeführt ist, und welche wenigstens einen oben beschriebenen Bremsmagneten umfasst.

Bei der Magnetschienenbremsvorrichtung kann dann der Bremsmagnet an einer Hubvorrichtung befestigt sein, welche eingerichtet und ausgebildet ist, den Bremsmagneten vertikal zu stellen, um ihn von einer von der Schiene abgehobenen Lage in eine auf die Schiene abgesenkte Lage zu stellen.

Die Erfindung betrifft in einem vierten Aspekt auch ein Schienenfahrzeug mit einer hierin beschriebenen Magnetschienenbremsvorrichtung.

Im Rahmen der Erfindung kann ein Schienenfahrzeug einen oder mehrere Wagen mit oder ohne eigenen Antrieb und/oder ein Zugfahrzeug in beliebiger Kombination bezeichnen. Insbesondere kann ein Schienenfahrzeug Triebwagen aufweisen. Ein Schienenfahrzeug oder ein Wagen des Schienenfahrzeugs kann Drehgestelle aufweisen, an denen Radachsen des Fahrzeugs angeordnet sind. Die Drehgestelle können an einem Wagenaufbau befestigt sein. Vorzugsweise ist dann eine hierin beschriebene Magnetschienenbremsvorrichtung an einem Drehgestell aufgehängt.

Die Erfindung wird nun mit Bezug auf die begleitenden Zeichnungen anhand einer bevorzugten Ausführungsform beispielhaft erläutert. Es zeigen:
- Fig.1: eine Seitenansicht eines Starrbremsmagneten einer Starrmagnetschienenbremsvorrichtung gemäß einer bevorzugten Ausführungsform in Gebrauchslage;
- Fig. 2: eine perspektivische Ansicht des Starrbremsmagneten von Fig.1;
- Fig.3: eine Stirnansicht des Bremsmagneten von Fig.1 in Gebrauchslage;
- Fig.4: eine Querschnittsdarstellung entlang der Ebene IV-IV von Fig.1;
- Fig.5: eine perspektivische Darstellung einer eigensteifen und selbsttragenden Magnetspule des Bremsmagneten von Fig.1;
- Fig. 6: einen Ablaufplan eines Verfahrens zur Herstellung des Bremsmagneten von Fig. 1.

### Beschreibung des Ausführungsbeispiels

Die Figuren zeigen eine bevorzugte Ausführungsform eines Starrmagneten 1 einer als Starrmagnetschienenbremsvorrichtung ausgebildeten Magnetschienenbremsvorrichtung. Starrmagnet 1 bedeutet, dass dieser keine beweglichen Elemente wie bei einem Gliedermagneten einer Gliedermagnetschienenbremsvorrichtung enthält.

Mittels einer hier nicht gezeigten Befestigungsvorrichtung ist der Starrmagnet 1 an einer Hubvorrichtung befestigt, welche einen vertikalen Hub des Starrmagneten 1 bewirkt, um ihn in Kontakt mit einem Schienenkopf einer hier ebenfalls nicht gezeugten Schiene zu bringen. Die Hubvorrichtung ist wiederum an einem Träger zu einem Achslager oder einem Drehgestell des Schienenfahrzeugs gehalten.

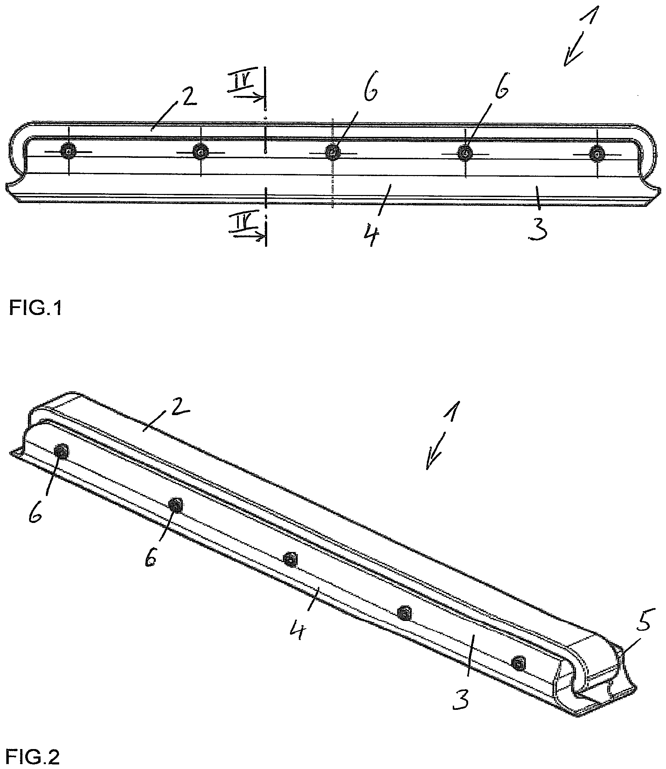

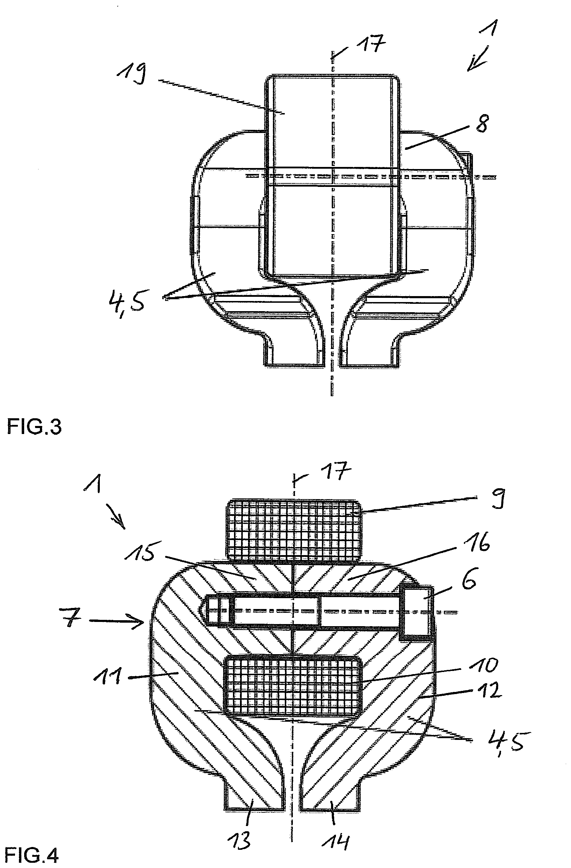

In **Fig. 1** ist der Starrmagnet 1 in einer Seitenansicht und in **Fig.2** in einer perspektivischen Darstellung dargestellt. Der Starrmagnet 1 besteht hier insbesondere ausschließlich aus einer selbsttragenden und/oder formsteifen und/oder eigensteifen Magnetspule 2 und einem Magnetkern 3 mit hier zwei Magnetkernhälften, einer ersten Magnetkernhälfte 4 und einer zweiten Magnetkernhälfte 5 **(****Fig. 4****)** sowie Verbindungsmitteln 6, welche die beiden Magnetkernhälften 4, 5 miteinander verbinden.

Die Magnetspule 2 umfasst derart in Längsrichtung des Starrmagneten 1 gesehen umlaufende Windungen eines elektrisch leitfähigen Spulendrahts, dass in ihr quer zur Längsrichtung eine Durchgangsöffnung 7 ausgebildet wird, wie am besten aus **Fig. 4** hervorgeht.

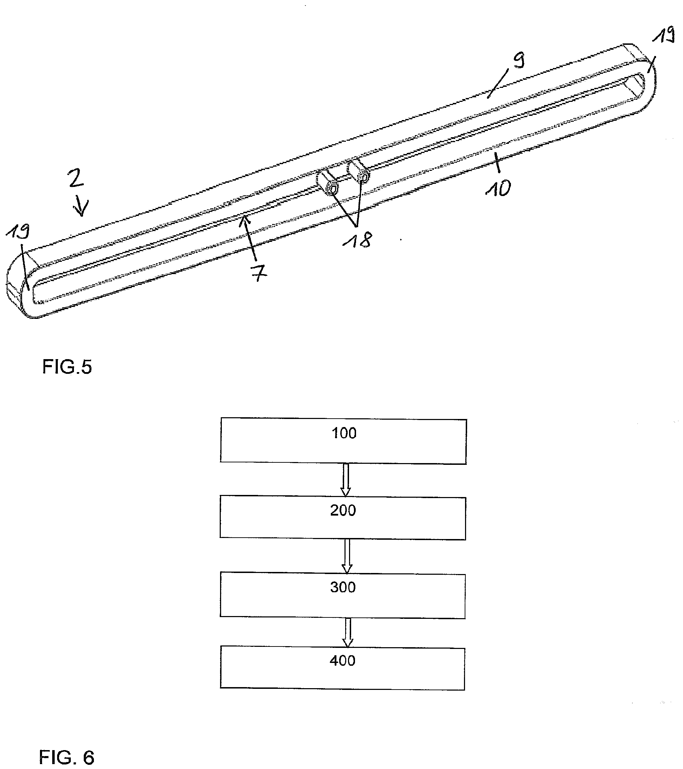

Wie **Fig. 3** und **Fig. 4** zeigen, ist der Magnetkern 3 im Querschnitt hufeisenförmig und weist ein Joch 8 auf, welches die Durchgangsöffnung 7 der Magnetspule 2 durchragt und welches von der Magnetspule 2 mit einem Oberzug 9 und einem Unterzug 10 umschlungen ist. In Fig. 3 und in Fig. 5 sind auch die beiden Übergangsabschnitte 19 zu sehen, mit welchen der Oberzug 9 in den Unterzug 10 übergeht und umgekehrt. Oberzug 9, Unterzug 10 und die beiden endseitigen Übergangsabschnitte 19 bilden dann zusammen eine in sich geschlossene und das Joch 8 umschlingende Ringform aus.

Weiterhin weist der Magnetkern 3 und hier insbesondere die beiden Magnetkernhälften 4, 5 zwei vom Joch 8 in Gebrauchslage nach unten, d.h. zum Schienenkopf ragende Schenkel auf, nämlich einen ersten Schenkel 11 und einen zweiten Schenkel 12, die endseitig jeweils mit Polschuhen versehen sind, nämlich einen ersten Polschuh 13 und einen zweiten Polschuh 14, welche jeweils zum Reibkontakt mit dem jeweils gegenüberliegenden Schienenkopf vorgesehen und ausgebildet sind.

Insbesondere umfasst der Magnetkern daher die erste Magnetkernhälfte 4 mit einem ersten Jochteil 15 des Jochs 8, dem ersten Schenkel 11 und dem ersten Polschuh 13, und die zweite Magnetkernhälfte 5 mit einem zweiten Jochteil 16 des Jochs 8, dem zweiten Schenkel 12 und dem zweiten Polschuh 14. An den beiden Magnetkernhälften 4, 5 sind dann die ersten und zweiten Polschuhe 13, 14 an den ersten und zweiten Schenkeln 11, 12 vertikal gesehen von den ersten und zweiten Jochteilen 15, 16 an voneinander wegweisenden Enden angeordnet.

Die beiden Magnetkernhälften 4, 5 sind insbesondere symmetrisch in Bezug auf eine mittige Symmetrieebene 17 des Starrmagneten 1 ausgeführt, die sich entlang der Längserstreckung des Starrmagneten 1 erstreckt und welche hier auch eine Trennebene zwischen den beiden Jochteilen 15, 16 bildet. Außerdem kontaktieren sich die beiden Magnetkernhälften 4, 5 bevorzugt ausschließlich an ihren Jochteilen 15, 16 in dieser Symmetrieebene oder Trennebene 17. Die Symmetrieebne 17 ist in Gebrauchslage des Starrmagneten gesehen außerdem vertikal. Dann besteht der Magnetkern hier beispielsweise lediglich aus den beiden Magnetkernhälften 4, 5 und den Verbindungsmitteln (Schrauben) 6.

Wie am besten anhand von **Fig 4** zu sehen, ragen die ersten und zweiten Jochteile 15, 16 der beiden Magnetkernhälften 4, 5 in die Durchgangsöffnung 7 der Magnetspule 2 hinein und sind dort durch die Verbindungsmittel 6, hier beispielsweise mittels mehrerer Schrauben miteinander verbunden.

Die Magnetspule 2 ist magnetspulenkörperlos, d.h. ohne Magnetspulenkörper und eigensteif und/oder formsteif und/oder selbsttragend ausgeführt. Magnetspulenkörperlos bedeutet, dass der Starrmagnet 1 oder die Magnetspule 2 ohne Magnetspulenkörper ausgeführt ist, auf welcher die Magnetspule 2 aufgewickelt wäre. Wie **Fig. 5** zeigt, ist die Magnetspule 2 per se form- oder eigensteif und/oder selbsttragend und behält ihre Form ohne weitere Komponenten bei.

Da dann der Magnetkern 3 und die Magnetspule 2 getrennte oder separate Komponenten des Starrmagneten 1 darstellen, wird eine unabhängige Reparatur und Aufarbeitung dieser Komponenten ermöglicht.

Bei dem Starrmagneten 1 kann die Ausführung der Magnetspule 2 als magnetspulenkörperlose, formsteife und/oder selbsttragende Magnetspule 2 wenigstens teilweise dadurch erzeugt sein, dass die Windungen des Spulendrahts mittels eines Mediums adhäsiv miteinander verbunden sind. Das Medium ist bevorzugt elektrisch nichtleitend.

Das Medium kann wenigstens Folgendes umfassen: Wenigstens einen Klebstoff, durch welchen die Windungen des Spulendrahts miteinander verklebt sind, und/oder ein aushärtbares Material, wobei die Windungen des Spulendrahts in das aushärtbare Material ein gebettet oder eingegossen sind. Insbesondere können die Windungen des Spulendrahts wenigstens teilweise in eine Matrix aus einem Harz und/oder Kunststoff eingegossen sein.

Zusätzlich oder alternativ kann die Ausführung der Magnetspule 2 als magnetspulenkörperlose, formsteife und/oder selbsttragende Magnetspule 2 wenigstens teilweise dadurch erzeugt sein, dass die Windungen des Spulendrahts in einer Struktur, insbesondere in einem Geflecht miteinander verflochten sind. Die Magnetspule stellt dann ein Geflecht oder Flechtwerk von Windungen des Spulendrahts dar, wobei die Struktur des Geflechts beliebig ist. Beispielsweise kann das Geflecht Verdrillungen des Spulendrahts umfassen. Das Geflecht oder Flechtwerk ist dann bevorzugt derart ausgeführt, dass die daraus geformte Magnetspule 2 form- oder eigensteif oder selbsttragend ist.

Zusätzlich oder alternativ kann die Ausführung der Magnetspule 2 als magnetspulenkörperlose, formsteife und/oder selbsttragende Magnetspule 2 wenigstens teilweise dadurch erzeugt sein, dass wenigstens einige der Windungen der Magnetspule aus einem elektrisch leitfähigen Spulenmaterial gegossene Windungen sind und die Magnetspule 2 wenigstens teilweise eine gießtechnisch hergestellte Magnetspule ist.

Es ist klar, dass die oben lediglich beispielhaft beschriebenen Maßnahmen zur Ausführung der Magnetspule 2 als magnetspulenkörperlose, formsteife und/oder selbsttragende Magnetspule 2 in beliebiger Weise untereinander kombiniert werden können. Beispielsweise kann die Magnetspule 2 als magnetspulenkörperlose, formsteife und/oder selbsttragende Magnetspule 2 dadurch erzeugt sein durch eine Kombination eines Geflechts oder Flechtwerks von Windungen des Spulendrahts mit einer Einbettung dieses Geflechts in eine Matrix aus einem adhäsiv wirkenden Medium, insbesondere eine Einbettung des Geflechts z.B. in ein aushärtbares Harz.

Wie **Fig. 5** zeigt, können elektrische Anschlüsse 18 der Magnetspule 2 an die magnetspulenkörperlose und/oder formsteife und/oder selbsttragende Magnetspule 2 bereits im Rahmen von deren Herstellung integral angeformt sein. Mit anderen Worten werden die elektrischen Anschlüsse 18 bevorzugt bereits bei der Herstellung der Magnetspule 2 an diese angeformt und bilden dann zusammen mit dieser eine einstückige Komponente des Bremsmagneten.

**Fig. 6** zeigt einen Ablaufplan einer bevorzugten Ausführungsform eines Verfahrens zur Herstellung des Starrmagneten 1 von **Fig. 1** bis **Fig. 5****.**

In einem Schritt 100 erfolgt das Herstellen der Magnetspule 2 als magnetspulenkörperlose, formsteife und/oder selbsttragende Magnetspule 2, wie oben beschrieben worden ist, insbesondere in der oben beschriebenen Ausführung mit jeweils einstückig angeformten elektrischen Anschlüssen 18 in einem einzigen Schritt 100. Das Ergebnis dieses Schritts 100 ist dann in **Fig. 5** dargestellt.

In einem weiteren Schritt 200, der zeitlich vor oder nach dem Herstellen der selbsttragenden Magnetspule 2 oder auch gleichzeitig damit liegen kann, werden die beiden Magnetkernhälften 4, 5 hergestellt, insbesondere in der oben beschriebenen Ausführung jeweils einstückig aus Jochteilen 15, 16, Schenkeln 11, 12 und Polschuhen 14, 15.

In einem den Schritten 200 und 300 zeitlich nachfolgenden Schritt 400 werden die beiden Jochteile 15, 16 der beiden Magnetkernhälften 4, 5 in die Durchgangsöffnung 7 der Magnetspule 2 eingeführt und hier durch die Verbindungsmittel 6, hier beispielsweise durch Schrauben miteinander verbunden.

Dann ist es für die Montage oder Demontage der beiden Magnetkernhälften 4, 5 und Magnetspule 2 ausreichend, die Verbindungsmittel 6 anzubringen oder zu lösen.

Zur Durchführung einer Bremsung werden die beiden Starrmagneten 1 der Starrmagnetschienenbremsvorrichtung durch die hier nicht gezeigte Hubvorrichtung auf die Schienenköpfe der Schienen herab gesenkt bis die Polschuhe 14, 15 der Magnetkernhälften 4, 5 die Schienenköpfe berühren und die Spulenwicklungen der Magnetspulen 2 bestromt, so dass der Stromfluss in den Magnetkernen 3 jeweils einen magnetischen Fluss erzeugt, der durch die Schienenköpfe geschlossen wird. Die Polschuhe 14, 15 werden infolgedessen in einer dem magnetischen Fluss entsprechenden Stärke auf die Schienenköpfe herabgezogen und an denselben angepresst. Über den Reibschluss zwischen den Polschuhen 14, 15 und den Schienenköpfen kommt dann die Bremskraft zustande, welche über Mitnehmer auf das Drehgestell übertragen werden.

### Bezugszeichenliste

- 1: Starrmagnet
- 2: Magnetspule
- 3: Magnetkern
- 4: erste Magnetkernhälfte
- 5: zweite Magnetkernhälfte
- 6: Verbindungsmittel
- 7: Durchgangsöffnung
- 8: Joch
- 9: Oberzug
- 10: Unterzug
- 11: erster Schenkel
- 12: zweiter Schenkel
- 13: erster Polschuh
- 14: zweiter Polschuh
- 15: erstes Jochteil
- 16: zweites Jochteil
- 17: Symmetrieebene
- 18: elektrische Anschlüsse
- 19: Übergangsabschnitte
- 100: Schritt
- 200: Schritt
- 300: Schritt
- 400: Schritt

## Patentansprüche

1. Bremsmagnet (1) einer Magnetschienenbremsvorrichtung eines Schienenfahrzeugs, aufweisend:
a) Eine Magnetspule (2) mit derart in Längsrichtung des Bremsmagneten (1) gesehen umlaufenden Windungen eines elektrisch leitfähigen Spulendrahts, dass quer zur Längsrichtung eine Durchgangsöffnung (7) ausgebildet wird,
b) einen insbesondere im Querschnitt hufeisenförmigen Magnetkern (2) mit einem Joch (8), welches die Durchgangsöffnung (7) der Magnetspule (2) durchragt und welches von der Magnetspule (2) mit einem Oberzug (9) und einem Unterzug (10) umschlungen ist, und mit zwei endseitigen zum Reibkontakt mit einem Schienenkopf einer Schiene ausgebildeten Polschuhen (13, 14), **dadurch gekennzeichnet, dass**
c) der Magnetkern (3) zwei miteinander verbundene Magnetkernhälften (4, 5) mit je einem Jochteil (15, 16) des Jochs (8) umfasst, welche in die Durchgangsöffnung (7) der Magnetspule (2) hineinragen, und dass
d) die Magnetspule (2) magnetspulenkörperlos und formsteif und/oder selbsttragend ausgeführt ist.

2. Bremsmagnet nach Anspruch 1, **dadurch gekennzeichnet, dass** die Ausführung der Magnetspule (2) als magnetspulenkörperlose, formsteife und/oder selbsttragende Magnetspule (2) wenigstens teilweise dadurch erzeugt ist, dass die Windungen des Spulendrahts mittels eines Mediums adhäsiv miteinander verbunden sind.

3. Bremsmagnet nach Anspruch 2, **dadurch gekennzeichnet, dass** das Medium wenigstens Folgendes umfasst: wenigstens einen Klebstoff, durch welchen die Windungen des Spulendrahts miteinander verklebt sind, und/oder ein aushärtbares Material, wobei die Windungen des Spulendrahts in das aushärtbare Material ein gebettet oder eingegossen sind.

4. Bremsmagnet nach einem der vorhergehenden Ansprüche, **dadurch gekennzeichnet, dass** die Ausführung der Magnetspule (2) als magnetspulenkörperlose, formsteife und/oder selbsttragende Magnetspule (2) wenigstens teilweise dadurch erzeugt ist, dass die Windungen des Spulendrahts miteinander in einer Struktur verflochten sind.

5. Bremsmagnet nach einem der vorhergehenden Ansprüche, **dadurch gekennzeichnet, dass** die Ausführung der Magnetspule (2) als magnetspulenkörperlose, formsteife und/oder selbsttragende Magnetspule (2) wenigstens teilweise dadurch erzeugt ist, dass wenigstens einige der Windungen der Magnetspule aus einem elektrisch leitfähigen Spulenmaterial hergestellte Windungen sind.

6. Bremsmagnet nach einem der vorhergehenden Ansprüche, **dadurch gekennzeichnet, dass** die Polschuhe (13, 14) der Magnetkernhälften (4, 5) jeweils einstückig mit den Magnetkernhälften (4, 5) ausgeführt sind.

7. Bremsmagnet nach einem der vorhergehenden Ansprüche, **dadurch gekennzeichnet, dass** elektrische Anschlüsse (18) der Magnetspule (2) an die magnetspulenkörperlose und formsteife und/oder selbsttragende Magnetspule (2) integral angeformt sind.

8. Bremsmagnet nach einem der vorhergehenden Ansprüche, **dadurch gekennzeichnet, dass** die Magnetkernhälften (4, 5) allein dadurch miteinander verbunden sind, dass die Jochteile (14, 15) der Magnetkernhälften (4, 5) insbesondere in der Durchgangsöffnung (7) miteinander verbunden sind.

9. Verfahren zum Herstellen eines Bremsmagneten (1) einer Magnetschienenbremsvorrichtung eines Schienenfahrzeugs, welcher wenigstens aufweist: Eine Magnetspule (2) mit derart in Längsrichtung des Bremsmagneten (1) gesehen umlaufenden Windungen eines elektrisch leitfähigen Spulendrahts, dass quer zur Längsrichtung eine Durchgangsöffnung (7) ausgebildet wird, einen insbesondere im Querschnitt hufeisenförmigen Magnetkern (3) mit einem Joch (8), welches die Durchgangsöffnung (7) der Magnetspule (2) durchragt und welches von der Magnetspule (2) mit einem Oberzug (9) und einem Unterzug (10) umschlungen ist, und mit zwei endseitigen zum Reibkontakt mit einem Schienenkopf einer Schiene vorgesehenen Polschuhen (14, 15), wobei der Magnetkern (3) zwei miteinander verbundene Magnetkernhälften (4, 5) mit je einem Jochteil (15, 16) umfasst, welche in die Durchgangsöffnung (7) der Magnetspule (2) hineinragen und vorzugsweise dort miteinander verbunden sind, **gekennzeichnet durch** wenigstens die folgenden Schritte:
a) Herstellen der Magnetspule (2) als magnetspulenkörperlose, formsteife und/oder selbsttragende Magnetspule, und
b) Herstellen der beiden Magnetkernhälften (4, 5), und
c) Einführen der beiden Jochteile (15, 16) der beiden Magnetkernhälften (4, 5) in die Durchgangsöffnung (7) der Magnetspule (2), und
d) Verbinden der beiden Magnetkernhälften (4, 5), insbesondere von deren Jochteilen (15, 16).

10. Verfahren nach Anspruch 9, **dadurch gekennzeichnet, dass** das Herstellen der Magnetspule (2) als magnetspulenkörperlose, formsteife und/oder selbsttragende Magnetspule umfasst, dass
a) die Windungen des Spulendrahts auf eine Form gewunden werden, deren Außenkontur im Wesentlichen der Innenkontur der Durchgangsöffnung (7) der Magnetspule (2) entspricht, und dann
b) die auf die Form gewundenen Windungen mit einem Medium versehen werden, welches die Windungen miteinander adhäsiv verbindet, und
c) nach der adhäsiven Verbindung der Windungen die Form aus der Durchgangsöffnung (7) der Magnetspule (2) entfernt wird.

11. Verfahren nach Anspruch 9 oder 10, **dadurch gekennzeichnet, dass** das Herstellen der Magnetspule (2) als magnetspulenkörperlose, formsteife und/oder selbsttragende Magnetspule umfasst, dass die Windungen der Magnetspule aus einem elektrisch leitfähigen Spulenmaterial gegossen werden und die Magnetspule (2) gießtechnisch hergestellt wird, wobei das elektrisch leitfähige Spulenmaterial zum Vergießen erhitzt wird und nach dem Gießen zu einer gewünschten Magnetspulenform erstarrt.

12. Verfahren nach einem der Ansprüche 9 bis 11, **dadurch gekennzeichnet, dass** die Ausführung der Magnetspule (2) als magnetspulenkörperlose, formsteife und/oder selbsttragende Magnetspule wenigstens teilweise dadurch erzeugt wird, dass die Windungen des Spulendrahts miteinander in einer Struktur verflochten werden.

13. Verfahren nach einem der Ansprüche 9 bis 12, **dadurch gekennzeichnet, dass** das Verbinden der beiden Magnetkernhälften (4, 5) ausschließlich durch ein Verbinden der beiden Jochteile (15, 16) erfolgt.

14. Verfahren nach einem der Ansprüche 9 bis 13, **dadurch gekennzeichnet, dass** das Herstellen der magnetspulenkörperlosen und formsteifen und/oder selbsttragenden Magnetspule (2) ein integrales Anformen von elektrischen Anschlüssen (18) an die Magnetspule (2) umfasst.

15. Verfahren nach einem der Ansprüche 9 bis 14, **dadurch gekennzeichnet, dass** das Herstellen der beiden Magnetkernhälften (4, 5) ein integrales Herstellen der beiden Magnetkernhälften (4, 5) zusammen mit den Polschuhen (13, 14) umfasst, so dass die Polschuhe (13, 14) einstückig mit den Magnetkernhälften (4, 5) ausgeführt sind.

16. Magnetschienenbremsvorrichtung eines Schienenfahrzeugs, **dadurch gekennzeichnet, dass** sie wenigstens einen Bremsmagneten (1) nach einem der Ansprüche 1 bis 9 umfasst.

17. Magnetschienenbremsvorrichtung nach Anspruch 16, **dadurch gekennzeichnet, dass** der Bremsmagnet (1) an einer Hubvorrichtung befestigt ist, welche eingerichtet und ausgebildet ist, den Bremsmagneten (1) vertikal zu stellen und Brems- und Querkräfte vom Bremsmagneten über Mitnehmer zu übertragen.

18. Schienenfahrzeug mit einer Magnetschienenbremsvorrichtung nach Anspruch 16 oder 17.
